(19) Europäisches Patentamt
European Patent Office
Office européen des brevets

(11) **EP 2 991 039 A1**

(12) **EUROPEAN PATENT APPLICATION**

(43) Date of publication:
**02.03.2016 Bulletin 2016/09**

(51) Int Cl.:
***G06T 19/00*** *(2011.01)*

(21) Application number: **15179914.5**

(22) Date of filing: **06.08.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **27.08.2014 JP 2014173041**

(71) Applicant: **Ricoh Company, Ltd.**
**Tokyo 143-8555 (JP)**

(72) Inventors:
• OKAMOTO, Takuya
  Tokyo, 104-6042 (JP)
• YOSHIDA, Hiroyuki
  Tokyo, 104-6042 (JP)
• ISHIHARA, Rieko
  Tokyo, 104-6042 (JP)
• KAWATA, Yuki
  Tokyo, 104-6042 (JP)

(74) Representative: **Schwabe - Sandmair - Marx Patentanwälte**
**Stuntzstraße 16**
**81677 München (DE)**

(54) **IMAGE PROCESSING APPARATUS, IMAGE PROCESSING METHOD, AND COMPUTER PROGRAM PRODUCT**

(57) An image processing apparatus includes: a setting unit that sets, when a setting instruction has been received from a user, a reference plane for arranging a virtual object in the real space, according to a detected first posture information of a photographing unit that photographs a real space; a deriving unit that derives a first relative direction of the reference plane to a photographing direction of the photographing unit; a first calculating unit that calculates second posture information of the reference plane located in the first relative direction; and a display control unit that performs control of displaying a superimposed image, in which an object image of a drawn virtual object in a posture of the second posture information is superimposed at an area corresponding to the reference plane in a real-space image taken by the photographing unit, on a display unit.

FIG.5

**Description**

CROSS-REFERENCE TO RELATED APPLICATIONS

The present application claims priority to and incorporates by reference the entire contents of Japanese Patent Application No. 2014-173041 filed in Japan on August 27, 2014.

BACKGROUND OF THE INVENTION

1. Field of the Invention

The present invention relates to an image processing apparatus, an image processing method, and a computer program product.

2. Description of the Related Art

There is known augmented reality (AR) technology to add computer-assisted information a real-space event. For example, there has been disclosed a technology to place an AR marker in a real space, and take a photograph of the real space including the AR marker thereby obtaining a photographed image, and then add a virtual object into the position of the AR marker included in this photographed image and display a composite image (for example, see Japanese Laid-open Patent Publication No. 2013-186691).
However, conventionally, it is necessary to place an AR marker in a real space, and it is difficult to easily provide an augmented reality image without depending on an environment of the real space.

SUMMARY OF THE INVENTION

It is an object of the present invention to at least partially solve the problems in the conventional technology.
An image processing apparatus includes: a photographing unit that photographs a real space; a detecting unit that detects first posture information of the photographing unit; a first acquiring unit that acquires the first posture information from the detecting unit; a receiving unit that receives a setting instruction from a user; a setting unit that sets, when the setting instruction has been received, a reference plane for arranging a virtual object in the real space, according to the first posture information; a deriving unit that derives a first relative direction of the reference plane to a photographing direction of the photographing unit; a first calculating unit that calculates second posture information of the reference plane located in the first relative direction; and a display control unit that performs control of displaying a superimposed image, in which an object image of a drawn virtual object in a posture of the second posture information is superimposed at an area corresponding to the reference plane in a real-space image taken by the photographing unit, on a display unit.
An image processing method is implemented by an image processing apparatus including a photographing unit that photographs a real space and a detecting unit that detects first posture information of the photographing unit. The image processing method includes: acquiring the first posture information from the detecting unit; receiving a setting instruction from a user; setting, when the setting instruction has been received, a reference plane for arranging a virtual object in the real space, according to the first posture information; deriving a first relative direction of the reference plane to a photographing direction of the photographing unit; calculating second posture information of the reference plane located in the first relative direction; and performing control of displaying a superimposed image, in which an object image of a drawn virtual object in a posture of the second posture information is superimposed at an area corresponding to the reference plane in the real-space image taken by the photographing unit, on a display unit.
A computer program product includes a non-transitory computer-readable medium containing an information processing program. The program causes a computer including a photographing unit that photographs a real space and a detecting unit that detects first posture information of the photographing unit to execute: acquiring the first posture information from the detecting unit; receiving a setting instruction from a user; setting, when the setting instruction has been received, a reference plane for arranging a virtual object in the real space, according to the first posture information; deriving a first relative direction of the reference plane to a photographing direction of the photographing unit; calculating second posture information of the reference plane located in the first relative direction; and performing control of displaying a superimposed image, in which an object image of a drawn virtual object in a posture of the second posture information is superimposed at an area corresponding to the reference plane in the real-space image taken by the photographing unit, on a display unit.
The above and other objects, features, advantages and technical and industrial significance of this invention will be better understood by reading the following detailed description of presently preferred embodiments of the invention, when considered in connection with the accompanying drawings.

BRIEF DESCRIPTION OF THE DRAWINGS

FIG. 1 is a schematic diagram of an image processing apparatus according to a present embodiment;
FIGS. 2A and 2B are schematic exterior views of the image processing apparatus;
FIGS. 3A and 3B are explanatory diagrams of a coordinate system;
FIG. 4 is an explanatory diagram of first posture information;
FIG. 5 is a block diagram showing a functional configuration of the image processing apparatus;
FIG. 6 is a diagram showing an example of data structure of a light-source-information table;
FIGS. 7A to 7C are diagrams showing an example of a posture of a photographing unit;
FIGS. 8A and 8B are explanatory diagrams showing an example of setting of a reference plane;
FIG. 9 is an explanatory diagram showing an example of settings of a reference plane and a first relative direction;
FIG. 10 is an explanatory diagram showing an example of setting of a reference plane;
FIGS. 11A and 11B are explanatory diagrams of resetting of the reference plane;
FIGS. 12A to 12D are detailed explanatory diagrams of the resetting of the reference plane;
FIGS. 13A to 13F are explanatory diagrams of how to calculate a scaling factor of a second distance with respect to a first distance;
FIGS. 14A and 14B are explanatory diagrams of a display of a superimposed image;
FIGS. 15A to 15F are explanatory diagrams of a display of an object image;
FIG. 16 is a sequence diagram showing a procedure of a display process; and
FIG. 17 is a hardware configuration diagram of the image processing apparatus.

DETAILED DESCRIPTION OF THE PREFERRED EMBODIMENTS

An exemplary embodiment of an image processing apparatus, image processing method, and computer program product according to the present invention will be explained in detail below with reference to accompanying drawings.

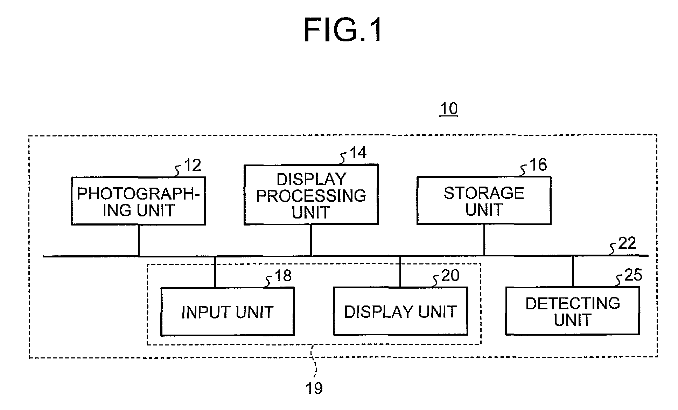

FIG. 1 is a schematic diagram of an image processing apparatus 10 according to the present embodiment.
The image processing apparatus 10 is an apparatus that displays a preview image on a display unit 20.
The image processing apparatus 10 includes a photographing unit 12, a display processing unit 14, a storage unit 16, an input unit 18, the display unit 20, and a detecting unit 25. The photographing unit 12, the display processing unit 14, the storage unit 16, the input unit 18, the display unit 20, and the detecting unit 25 are electrically connected by a bus 22.
Incidentally, the image processing apparatus 10 can be configured such that the photographing unit 12, the display processing unit 14, and the detecting unit 25 are separate from at least one of the storage unit 16, the input unit 18, and the display unit 20.
Furthermore, the image processing apparatus 10 can be a portable terminal, or can be a stationary terminal. In the present embodiment, as an example, the image processing apparatus 10 is explained as a portable terminal that includes the photographing unit 12, the display processing unit 14, the storage unit 16, the input unit 18, the display unit 20, and the detecting unit 25 in an integral manner. Furthermore, the image processing apparatus 10 can be configured to further include other function units, such as a communication unit for communicating with an external device.
The photographing unit 12 photographs a real space in which the image processing apparatus 10 is located. The real space is, for example, a room. Furthermore, the real space is, for example, a room composed of multiple wall surfaces; for example, the real space is a cubic room composed of a floor surface, a ceiling surface, and four wall surfaces each continuous to the floor and ceiling surfaces. Incidentally, the real space can be any actual space in which the image processing apparatus 10 is located, and is not limited to a room. The photographing unit 12 is a known photographing device that obtains image data by taking a photograph.
The display unit 20 displays thereon various images. The display unit 20 is a known display device such as a liquid crystal display (LCD) or a projector that projects an image. In the present embodiment, a superimposed image to be described later is displayed on the display unit 20.
Furthermore, in the present embodiment, as an example, there is described a case where the display unit 20 and the photographing unit 12 are installed on a housing of the image processing apparatus 10 so that a display direction of the display unit 20 and a photographing direction of the photographing unit 12 are the opposite directions (in a 180-degree relationship).

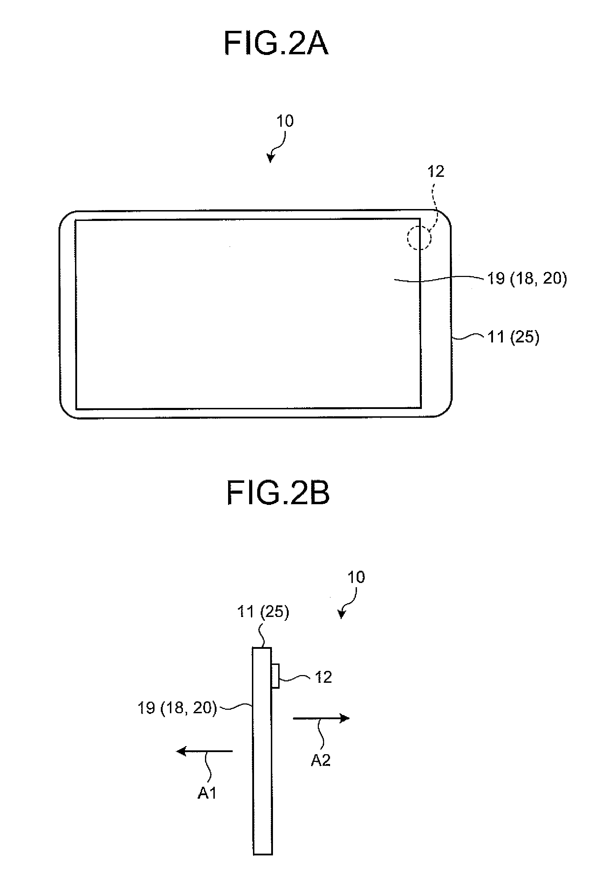

FIGS. 2A and 2B are schematic exterior views of the image processing apparatus 10. On a housing 11 of the image processing apparatus 10, the photographing unit 12 and the display unit 20 are installed. Inside the housing 11, the detecting unit 25, the display processing unit 14, the storage unit 16, etc. are installed. As shown in FIGS. 2A and 2B, in the present embodiment, the photographing unit 12 and the display unit 20 are installed so that a photographing direction A2 of the photographing unit 12 and a display direction A1 of the display unit 20 the opposite directions. Incidentally, the photographing direction A2 of the photographing unit 12 and the display direction A1 of the display unit 20 are not limited to be in a 180-degree relationship, and can be the same direction (in a 0-degree relationship) or in a relationship of any angle within a range of 0 to 180 degrees.

As an example, in the present embodiment, there is described the case where the photographing direction A2 of the photographing unit 12 and the display direction A1 of the display unit 20 are set to be the opposite directions. Therefore, for example, when a photographed image taken by the photographing unit 12 is displayed on the display unit 20 in a state where the position of the image processing apparatus 10 is fixed, the photographed image displayed on the display unit 20 and a scene of a real space located behind the display unit 20 (on the side opposite to the display direction A1 of the display unit 20) are about the same.

To return to FIG. 1, the input unit 18 receives various operations from a user. The input unit 18 is, for example, a mouse, voice recognition through a microphone, a button, a remote controller, a keyboard, etc.

Incidentally, the input unit 18 and the display unit 20 can be integrated as one unit. In the present embodiment, there is described a case where the input unit 18 and the display unit 20 are integrated as a UI unit 19. The UI unit 19 is, for example, a touch panel having both a display function and an input function. Therefore, the user operates on a display surface of the UI unit 19 while checking an image displayed on the UI unit 19, thereby the user can perform various inputs.

The storage unit 16 is a storage medium such as a memory or a hard disk drive (HDD), and stores therein various programs for performing various processes to be described later and various data.

The detecting unit 25 detects first posture information indicating a posture of the photographing unit 12 in a real space.

The first posture information is information indicating a posture of the photographing unit 12 in a real space. Specifically, the first posture information is information indicating a posture of an optical axis of the photographing unit 12 in a real space. Incidentally, in the present embodiment, there is described a case where a direction of the optical axis of the photographing unit 12 agrees with the photographing direction A2 of the photographing unit 12.

The posture here indicates a tilt of the photographing unit 12 in a real space with respect to a reference posture (to be described in detail later). In the present embodiment, the first posture information is expressed in a turning angle (a roll angle $\alpha$, a pitch angle $\beta$, and a yaw angle $\gamma$) with respect to the reference posture (to be described in detail below).

Specifically, in the present embodiment, the reference posture is, in a camera coordinate system where a right-left direction of a photographing surface of the photographing unit 12 perpendicular to the photographing direction A2 is the X-axis, an up-down direction of the photographing surface is the Y-axis, and a direction normal to the photographing surface is the Z-axis, a posture when the X-axis agrees with an east-west direction, the Y-axis agrees with a vertical direction, and the Z-axis agrees with a north-south direction.

Then, in the present embodiment, the first posture information indicates a tilt (a posture) of the photographing direction A2 of the photographing unit 12 to this reference posture, and is expressed in a turning angle (a roll angle $\alpha$, a pitch angle $\beta$, and a yaw angle $\gamma$) with respect to the reference posture. Incidentally, hereinafter, the posture of the photographing direction A2 of the photographing unit 12 may be described simply as the posture of the photographing unit 12.

Incidentally, an X-Y plane in the camera coordinate system agrees with the photographing surface perpendicular to the photographing direction A2. Furthermore, in the present embodiment, the photographing surface perpendicular to the photographing direction A2 agrees with a display surface of the display unit 20. Moreover, the origin (a point of 0) of the camera coordinate system is the center of the photographing surface of the photographing unit 12.

As described above, in the present embodiment, the photographing unit 12 is integrated into the image processing apparatus 10. Therefore, the first posture information of the photographing unit 12 also indicates postures of the image processing apparatus 10, the display unit 20, and the UI unit 19.

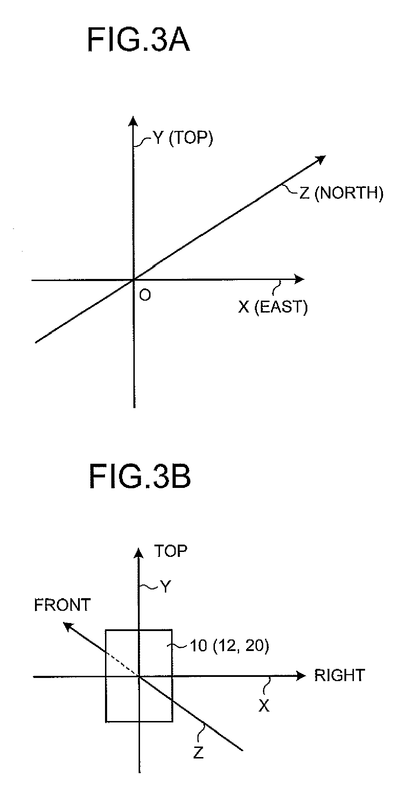

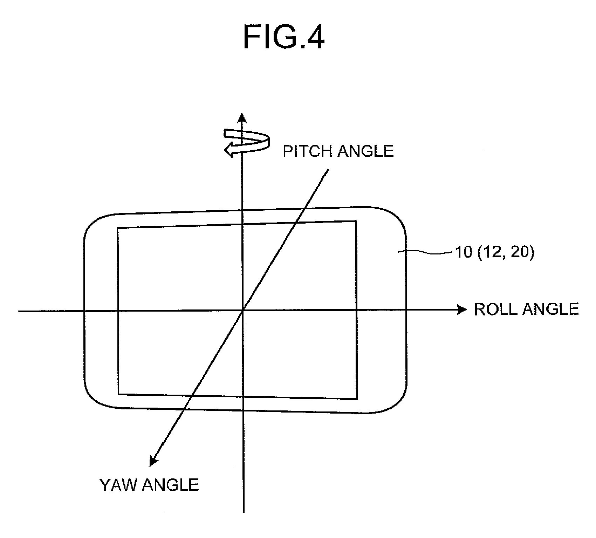

FIGS. 3A and 3B are explanatory diagrams of a coordinate system. FIG. 3A is an explanatory diagram of a three-dimensional coordinate system (i.e., a world coordinate system) of a real space. FIG. 3B is an explanatory diagram of a camera coordinate system based on the photographing surface of the photographing unit 12 perpendicular to the photographing direction A2 (in the present embodiment, identical to the display surface of the display unit 20). FIG. 4 is an explanatory diagram of the first posture information.

That is, in the present embodiment, a posture when the X-axis of the camera coordinate system (see FIG. 3B) agrees with the east-west direction of the world coordinate system (see a direction of the X-axis in FIG. 3A), the Y-axis of the camera coordinate system (see FIG. 3B) agrees with the vertical direction of the world coordinate system (see a direction of the Y-axis in FIG. 3A), and the Z-axis of the camera coordinate system (see FIG. 3B) agrees with the north-south direction of the world coordinate system (see a direction of the Z-axis in FIG. 3A) is set as the reference posture. Then, in the present embodiment, the first posture information is expressed in a turning angle (a roll angle $\alpha$, a pitch angle $\beta$, and a yaw angle $\gamma$) of the photographing unit 12 with respect to the reference posture (see FIG. 4).

Incidentally, in FIGS. 3 and 4, for the sake of simplicity of explanation, the postures of the display unit 20 and the UI unit 19 which have the same posture as the photographing unit 12 are illustrated as the posture of the photographing unit 12.

As the detecting unit 25, a known detector capable of detecting a tilt or a direction (an angle) is used. For example, the detecting unit 25 is a gyro sensor (a triaxial accelerometer), an electromagnetic compass, a gravitational accelerometer, or the like.

Incidentally, the detecting unit 25 can be configured to further include a known device that detects a position in a real space (specifically, a position in the world coordinate system). For example, the detecting unit 25 can be configured to include a global positioning system (GPS). In this case, the detecting unit 25 can detect the position (latitude, longitude, and altitude) of the photographing unit 12 in a real space in addition to the first posture information.

To return to FIG. 1, the display processing unit 14 is a computer including a central processing unit (CPU), a read-only memory (ROM), a random access memory (RAM), etc. Incidentally, the display processing unit 14 can be a circuit or the like other than a general CPU. The display processing unit 14 controls the units included in the image processing apparatus 10.

The display processing unit 14 performs control of displaying a superimposed image on the display unit 20. The superimposed image is an image obtained by superimposing an object image of a virtual object on a real-space image which is a taken photograph of a real space.

The virtual object is a virtual object that is not included in the taken real-space image. The virtual object is, for example, image data that the display processing unit 14 can handle. The image data of the virtual object is, for example, image data of an image created by an external device or the display processing unit 14 or image data of a photographed image taken at different timing from that of the real-space image, but is not limited to these.

In a display process performed by the display processing unit 14, a 3D engine using a programming interface for graphics operation is used. For example, the display processing unit 14 implements the display process with a 3D engine such as Open Graphics Library (OpenGL).

In the present embodiment, there is described a case where a superimposed image is an image obtained such that a real-space image is arranged in a virtual three-dimensional space, a virtual object is drawn on the virtual three-dimensional space thereby creating an object image, and a three-dimensional model in which the real-space image and the object image are arranged is projected onto a two-dimensional surface.

Incidentally, a superimposed image can be a two-dimensional model in which a real-space image and an object image are arranged in a two-dimensional space.

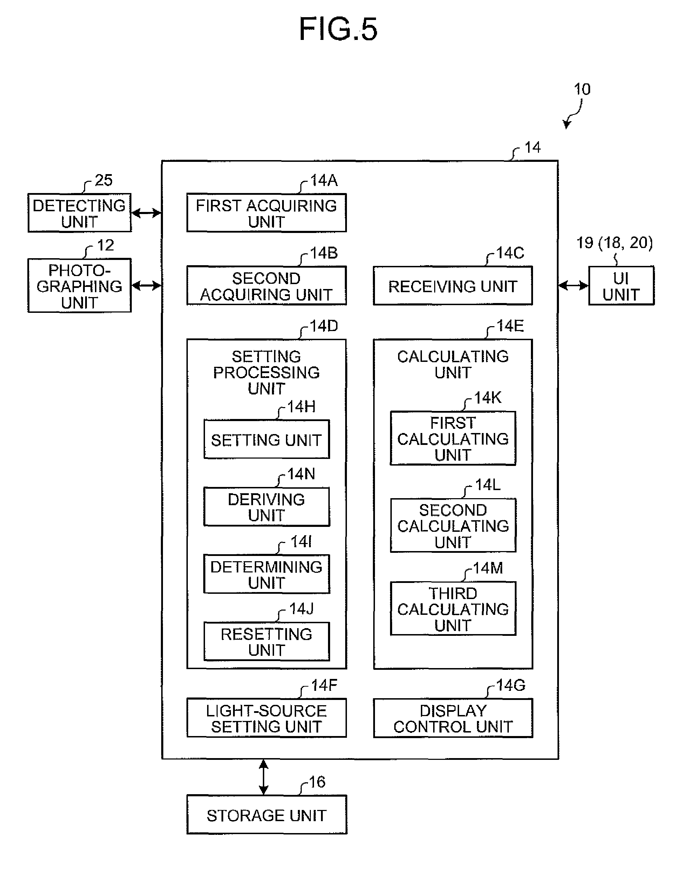

FIG. 5 is a block diagram showing a functional configuration of the image processing apparatus 10. As described above, the image processing apparatus 10 includes the detecting unit 25, the photographing unit 12, the storage unit 16, the UI unit 19, and the display processing unit 14. The detecting unit 25, the photographing unit 12, the storage unit 16, and the UI unit 19 are connected to the display processing unit 14 so that they can give and receive a signal or data.

The display processing unit 14 includes a first acquiring unit 14A, a second acquiring unit 14B, a receiving unit 14C, a setting processing unit 14D, a calculating unit 14E, a light-source setting unit 14F, and a display control unit 14G.

Some or all of the first acquiring unit 14A, the second acquiring unit 14B, the receiving unit 14C, the setting processing unit 14D, the calculating unit 14E, the light-source setting unit 14F, and the display control unit 14G can be realized by causing a processor such as a CPU to execute a program, i.e., by software, or can be realized by hardware such as an integrated circuit (IC), or can be realized by a combination of software and hardware.

The first acquiring unit 14A acquires first posture information from the detecting unit 25. The detecting unit 25 continuously detects first posture information, and sequentially outputs the detected first posture information to the first acquiring unit 14A. Therefore, the first acquiring unit 14A sequentially acquires the first posture information indicating the latest posture of the photographing unit 12 continuously.

The second acquiring unit 14B acquires a real-space image taken by the photographing unit 12. Incidentally, in the present embodiment, when start of a display processing application has been instructed by a user operating the UI unit 19, the photographing unit 12 starts continuous photographing of a real space and sequentially outputs the taken real-space image to the display processing unit 14. The second acquiring unit 14B acquires the real-space image taken by the photographing unit 12. Therefore, the second acquiring unit 14B sequentially acquires the latest real-space image continuously.

The receiving unit 14C receives various user's instructions from the UI unit 19 (the input unit 18). In the present embodiment, the receiving unit 14C receives designation of a virtual object to be displayed.

For example, the display control unit 14G displays a selection screen for selecting several pieces of image data which have been stored in the storage unit 16 on the UI unit 19. A user selects image data to be displayed, for example, through the selection screen displayed on the UI unit 19 (the display unit 20). Accordingly, the receiving unit 14C accepts the selected image data as a virtual object.

Furthermore, the receiving unit 14C receives an instruction to set a reference plane to be described later.

Moreover, the receiving unit 14C receives light source information. The light source information is information indicating a reflection property of a virtual light source arranged in a virtual three-dimensional space. For example, the receiving unit 14C stores a light-source-information table in the storage unit 16 in advance. Then, the receiving unit 14C receives light source information selected from the light-source-information table by a user designating through the DI unit 19 (the input unit 18).

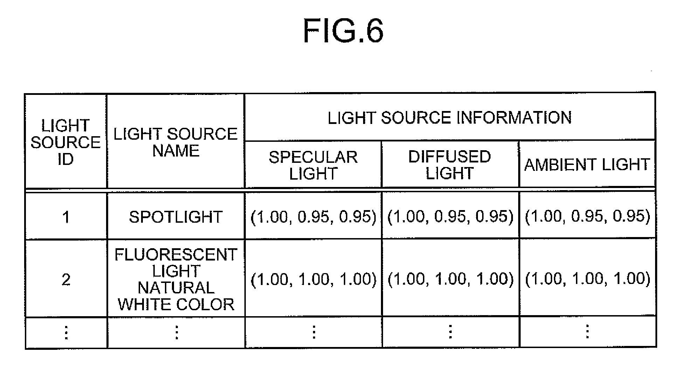

FIG. 6 is a diagram showing an example of data structure of the light-source-information table. The light-source-information table is information that associates a light source ID for identifying a type of a light source, a name of the light source, and light source information with one another. Incidentally, the light-source-information table can be a database, and the data format is not limited.

The light source information is information indicating a light attribute of a light source identified by a corresponding light source ID. The light attribute is information for identifying a reflection amount for rendering a light when a superimposed image is displayed. The light source information is expressed in light quantities (luminance) of R, G, and B color components in each of specular light, diffused light, and ambient light which are items relating to color temperature of the light source. The maximum light value of each RGB color component is "1.0", and the minimum light value is "0". Specifically, "(1.00, 0.95, 0.95)" described as an example of a value of specular light in FIG. 6 shows that light quantities of R, G, and B color components of a specular light are 1.00, 0.95, and 0.95, respectively.

The display control unit 14G reads the light-source-information table stored in the storage unit 16, and displays a list of light source information registered in the light-source-information table on the UI unit 19 (the display unit 20) in a user-selectable form. A user selects a piece of light source information corresponding to an intended light source name from the displayed list of light source information by operating the input unit 18. Accordingly, the receiving unit 14C accepts the selected light source information.

To return to FIG. 5, the setting processing unit 14D performs setting of a reference plane, derivation of a first relative direction of the reference plane to a photographing direction of the photographing unit 12, resetting of a reference plane, etc.

The setting processing unit 14D includes a setting unit 14H, a deriving unit 14N, a determining unit 14I, and a resetting unit 14J.

The setting unit 14H sets, when an instruction to set a reference plane has been received, a reference plane for arranging a virtual object in a real space according to first posture information acquired when the setting instruction has been received.

The reference plane is a planar area in a real space. For example, assume that a real space is a room composed of multiple wall surfaces. In this case, the reference plane is one of the multiple wall surfaces. Furthermore, assume that a real space is a room composed of a floor surface, a ceiling surface, and four wall surfaces each continuous to the floor and ceiling surfaces. In this case, the reference plane is one of the six wall surfaces composing the cubic room.

Specifically, the setting unit 14H receives first posture information, which has been detected upon receipt of an instruction to set a reference plane, from the first acquiring unit 14A. Then, the setting unit 14H sets a reference plane by using the first posture information.

For example, the display control unit 14G displays a real-space image on the display unit 20, and further displays a message prompting an instruction to set a reference plane. A user adjusts the photographing direction so as to face to a direction of a plane (such as a ceiling, a floor surface, or a wall surface) in which the user wants to arrange a virtual object while checking the real-space image displayed on the display unit 20, and presses a SET button (not shown). Then, the receiving unit 14C receives a setting instruction and outputs the setting instruction to the setting unit 14H of the setting processing unit 14D.

When the setting unit 14 has received this setting instruction, the setting unit 14 sets a reference plane by using first posture information when the setting instruction has been received.

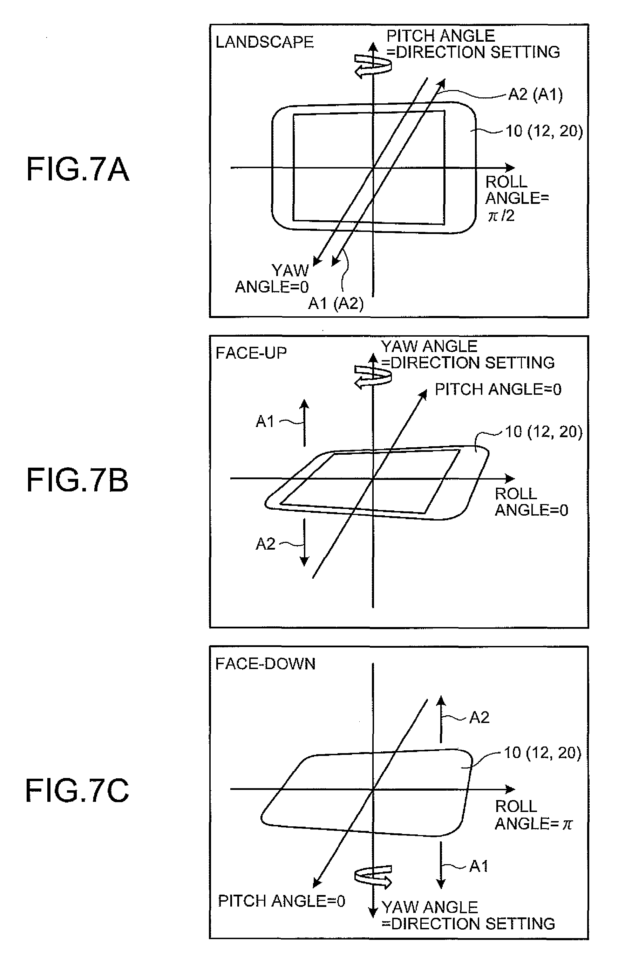

FIGS. 7A to 7C are diagrams showing an example of a posture of the photographing unit 12 (the image processing apparatus 10, the display unit 20) according to first posture information received from the first acquiring unit 14A.

Postures identified by first posture information include, for example, landscape (see FIG. 7A), face-up (see FIG. 7B), face-down (see FIG. 7C), etc.

The landscape is a posture when the photographing surface of the photographing unit 12 perpendicular to the photographing direction A2 (the same plane as the display surface of the display unit 20) agrees with a plane parallel to the vertical direction in the world coordinate system. The face-up is a posture when the photographing surface of the photographing unit 12 perpendicular to the photographing direction A2 (the same plane as the display surface of the display unit 20) agrees with a plane normal to the vertical direction and the display direction A1 of the display unit 20 agrees with an opposite vertical direction (a direction opposite to a gravity direction). The face-down is a posture when the photographing surface of the photographing unit 12 perpendicular to the photographing direction A2 (the same plane as the display surface of the display unit 20) agrees with the plane normal to the vertical direction and the display direction A1 of the display unit 20 agrees with the vertical direction (the gravity direction).

When a user issues an instruction to set a reference plane, it is preferable that the user grasps the image processing apparatus 10 in a posture such as the landscape, the face-up, or the face-down and inputs a setting instruction.

To return to FIG. 5, the setting unit 14H sets a reference plane by using first posture information acquired when a setting instruction has been received.

Explain setting of a reference plane specifically. Using first posture information acquired when a setting instruction has been received, the setting unit 14H sets one of multiple wall surfaces composing a room in which the photographing unit 12 is located as a reference plane.

Specifically, the setting unit 14H sets a plane in a real space which intersects the photographing direction of the photographing unit 12 as a reference plane.

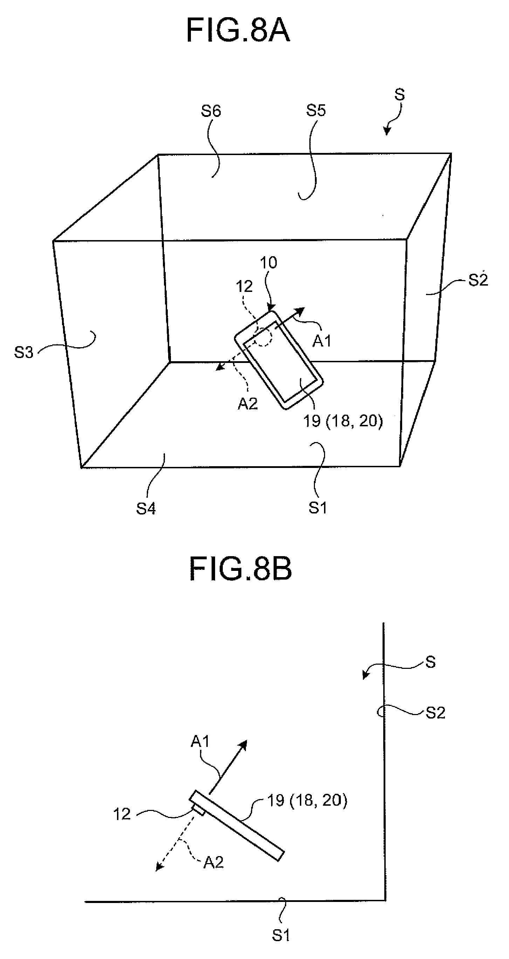

FIG. 8 is an explanatory diagram showing an example of setting of a reference plane.

For example, assume that the image processing apparatus 10 is located in a cubic room composed of a floor surface S1, a ceiling surface S6, and four wall surfaces (S2 to S5) each continuous to the floor and ceiling surfaces as a real space. Then, assume that the image processing apparatus 10 is positioned so that the photographing direction A2 of the photographing unit 12 is directed to the side of the floor surface S1 and the display direction A1 is directed to the wall surface S2 (see FIG. 8A).

In the case of a state shown in FIG. 8, a plane in the real space which intersects the photographing direction A2 identified by first posture information is the floor surface S1 (see FIG. 8B). That is, in this case, the setting unit 14H sets the floor surface S1 as a reference plane.

Here, the setting unit 14H sets a reference plane according to a relationship between the photographing direction A2 of the photographing unit 12 and the display direction A1 of the display unit 20 in the image processing apparatus 10 when a setting instruction has been received.

For example, assume that the arrangement of the photographing unit 12 and the display unit 20 is adjusted so that the photographing direction A2 of the photographing unit 12 in the image processing apparatus 10 and the display direction A1 of the display unit 20 in the image processing apparatus 10 are the opposite directions (in a 180-degree relationship).

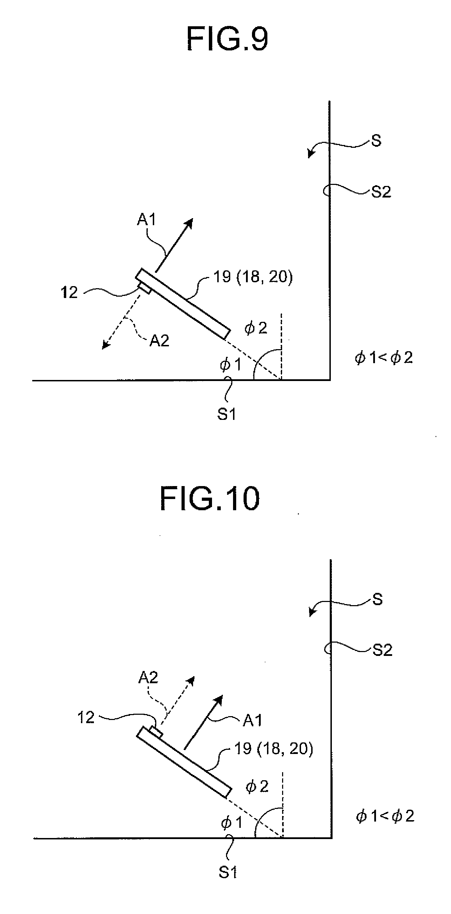

FIG. 9 is an explanatory diagram showing an example of settings of a reference plane and a first relative direction. Incidentally, the arrangement of wall surfaces S in FIG. 9 is the same as shown in FIG. 8A. Furthermore, FIG. 9 shows a case where the photographing direction A2 of the photographing unit 12 in the image processing apparatus 10 and the display direction A1 of the display unit 20 in the image processing apparatus 10 are the opposite directions (in a 180-degree relationship).

When the photographing direction A2 of the photographing unit 12 and the display direction A1 of the display unit 20 are the opposite directions, the setting unit 14H sets, out of multiple wall surfaces composing a room in which the photographing unit 12 is located in a real space, a wall surface which intersects the photographing direction A2 or counter-photographing direction of the photographing unit 12 and forms the smallest angle with the photographing surface perpendicular to the photographing direction A2 as a reference plane.

In the example shown in FIG. 9, the setting unit 14H identifies, out of multiple wall surfaces S, the floor surface S1 and the wall surface S2 which intersect the photographing direction A2 and the display direction A1.

Then, the setting unit 14H sets, out of the identified wall surfaces, a wall surface which forms the smallest angle with the photographing surface perpendicular to the photographing direction A2 as a reference plane. In the example shown in FIG. 9, out of the identified floor surface S1 and wall surface S2, the floor surface S1 which is a wall surface forming the smallest angle with the photographing surface perpendicular to the photographing direction A2 (see angles $\varphi 1$ and $\varphi 2$ ($\varphi 1 < \varphi 2$) in FIG. 9) is set as a reference plane. Incidentally, when the angle $\varphi 1$ and the angle $\varphi 2$ are the same, out of the identified floor surface S1 and wall surface S2, the floor surface S1 which is a wall surface S located on the downstream side of the photographing unit 12 in the photographing direction A2 is set as a reference plane.

On the other hand, assume that the arrangement of the photographing unit 12 and the display unit 20 is adjusted so that the photographing direction A2 of the photographing unit 12 in the image processing apparatus 10 and the display direction A1 of the display unit 20 in the image processing apparatus 10 are the same direction (in a 0-degree relationship).

FIG. 10 is an explanatory diagram showing an example of setting of a reference plane. Incidentally, the arrangement of wall surfaces S in FIG. 10 is the same as shown in FIG. 8A. Furthermore, FIG. 10 is an explanatory diagram showing a case where the photographing direction A2 of the photographing unit 12 in the image processing apparatus 10 and the display direction A1 of the display unit 20 in the image processing apparatus 10 are the same direction (in a 0-degree relationship).

When the photographing direction A2 of the photographing unit 12 and the display direction A1 of the display unit 20 are the same direction, the setting unit 14H sets, out of multiple wall surfaces composing a room in which the photographing unit 12 is located in a real space, a wall surface which intersects the photographing direction A2 or counter-photographing direction of the photographing unit 12 and forms the largest angle with the photographing surface perpendicular to the photographing direction A2 as a reference plane.

In the example shown in FIG. 10, the setting unit 14H identifies, out of multiple wall surfaces S, the floor surface S1 and the wall surface S2 which intersect the photographing direction A2, the display direction A1, and a counter direction of the direction A1, A2.

Then, the setting unit 14H sets, out of the identified wall surfaces, a wall surface which forms the largest angle with the photographing surface perpendicular to the photographing direction A2 as a reference plane and a first relative direction. In the example shown in FIG. 10, out of the identified floor surface S1 and wall surface S2, the wall surface S2 which is a wall surface forming the largest angle with the photographing surface perpendicular to the photographing direction A2 (see angles $\varphi1$ and $\varphi2$ ($\varphi1<\varphi2$) in FIG. 10) is set as a reference plane. Incidentally, when the angle $\varphi1$ and the angle $\varphi2$ are the same, out of the identified floor surface S1 and wall surface S2, the wall surface S2 which is a wall surface S located on the downstream side of the photographing unit 12 in the photographing direction A2 is set as a reference plane.

To return to FIG. 5, the deriving unit 14N derives a first relative direction of a set reference plane to the current photographing direction A2 of the photographing unit 12. The deriving unit 14N identifies the current photographing direction A2 of the photographing unit 12 by using sequentially-detected first posture information. Then, the deriving unit 14N derives a first relative direction which is a relative direction of a reference plane set by the setting unit 14H to the identified current photographing direction A2.

Therefore, when the photographing direction A2 of the photographing unit 12 is turned, for example, in accordance with turning of the image processing apparatus 10, a first relative direction of a reference plane to the current photographing direction A2 of the photographing unit 12 after the turning is sequentially calculated along with the turning.

The determining unit 14I determines whether the photographing direction A2 has turned by a predetermined first relative angle or more since a reference plane was set on the basis of a result of a comparison between first posture information used in the setting of the reference plane and currently-acquired first posture information. The currently-acquired first posture information is the latest first posture information, and is first posture information indicating a current posture of the photographing unit 12. That is, the determining unit 14I determines whether a turning angle from the photographing direction A2 of when the reference plane was set is the first relative angle or more.

For example, each time the setting unit 14H sets a reference plane, the setting unit 14H stores first posture information used in the setting in the storage unit 16 as first posture information of when the reference plane was set. Incidentally, if the first posture information of when the reference plane was set has already been stored in the storage unit 16, the setting unit 14H overwrites the already-stored first posture information of when the reference plane was set so that first posture information used in setting of the latest reference plane is stored. Furthermore, when after-mentioned resetting of a reference plane has been performed, first posture information used in the resetting is stored in the storage unit 16 as first posture information of when the reference plane was set so that the existing first posture information is overwritten.

For example, the setting unit 14H stores first posture information ($A_0=(\alpha_0, \beta_0, \gamma_0)$) used in setting of a reference plane in the storage unit 16. $\alpha_0$ is a roll angle $\alpha$ indicated by the first posture information of when the reference plane was set. $\beta_0$ is a pitch angle $\beta$ indicated by the first posture information of when the reference plane was set. $\gamma_0$ is a yaw angle $\gamma$ indicated by the first posture information of when the reference plane was set.

Then, assume that currently-acquired first posture information, which indicates a current posture of the photographing unit 12, is, for example, $A_t=(\alpha_t, \beta_t, \gamma_t)$. t denotes time elapsed since the acquisition of the first posture information used in the setting of the reference plane. That is, At is first posture information indicating a posture of the photographing unit 12 when an elapsed time "t" has elapsed since a time point "0" at which the reference plane was set (i.e., a current posture of the photographing unit 12).

Then, the determining unit 14I calculates, as a turning angle of the photographing direction A2 of the photographing unit 12 from that of when the reference plane was set, a subtracted value $A_t-A_0$ that the first posture information $A_0$ used in the setting of the reference plane is subtracted from the first posture information $A_t$ indicating the current posture of the photographing unit 12.

Then, the determining unit 14I determines whether the turning angle represented by the subtracted value $A_t-A_0$ (specifically, the absolute value of $A_t-A_0$) is a predetermined first relative angle or more.

An arbitrary value shall be set as the first relative angle in advance. Incidentally, this first relative angle can be appropriately changed by a user designating through the input unit 18.

The first relative angle is an angle smaller than a second relative angle to be described later. For example, when the second relative angle is 90°, the first relative angle preferably is in a range of larger than 45° and smaller than 90°, and more preferably is 80°.

Furthermore, for example, when the second relative angle is 180°, the first relative angle preferably is in a range of larger than 135° and smaller than 180°, and more preferably is 170°.

The resetting unit 14J resets, when the determining unit 14I has determined that the photographing direction A2 of the photographing unit 12 has turned by the first relative angle or more, a plane obtained by turning the reference plane by the second relative angle larger than the first relative angle as a new reference plane. Incidentally, a turning direction of the reference plane is the same direction as the determined turning direction of the photographing direction A2.

For example, assume that the second relative angle is set to 90° and the first relative angle is set to 80°. Then, assume that the image processing apparatus 10 is turned with the vertical direction as the axis of turning in a real space such as a cubic room. In this case, the resetting unit 14J can reset each of wall surfaces S of the room that intersect the photographing direction A2 as a reference plane sequentially according to the turning.

First posture information $A_0$ of the photographing unit 12 of when the reference plane was reset is represented by the following equation (1).

$$A_0 = (\alpha_0 + \pi/2 \times S_\alpha, \quad \beta_0 + \pi/2 \times S_\beta, \quad \gamma_0 + \pi/2 \times S_\gamma) \quad\quad\quad (1)$$

In equation (1), $S_\alpha$, $S_\beta$, $S_\gamma$ are an integer variable {0, 1, 2, 3} which indicates a change in the posture of the photographing unit 12. $\alpha_0$ is a roll angle $\alpha$ indicated by first posture information of when the reference plane was set last time (first posture information of before the reference plane was reset). $\beta_0$ is a pitch angle $\beta$ indicated by first posture information of when the reference plane was set last time (first posture information of before the reference plane was reset). $\gamma_0$ is a yaw angle $\gamma$ indicated by first posture information of when the reference plane was set last time (first posture information of before the reference plane was reset).

Then, the resetting unit 14J stores the first posture information $A_0$ of the reset reference plane in the storage unit 16 as first posture information used when the reference plane was set so that the existing first posture information is overwritten.

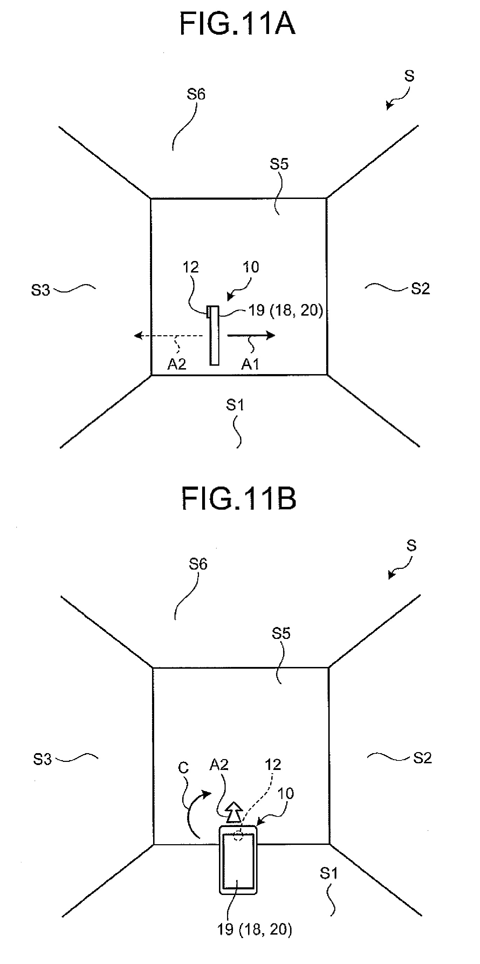

FIGS. 11A and 11B are explanatory diagrams of resetting of a reference plane. Assume that, as shown in FIG. 11A, the photographing direction A2 of the photographing unit 12 in a posture identified by first posture information of when a reference plane was set is a direction intersecting the wall surface S3 continuous to the floor surface S1 and the wall surface S3 is set as a reference plane.

From this state, for example, assume that in accordance with turning of the image processing apparatus 10, the photographing direction A2 of the photographing unit 12 is turned from the direction intersecting the wall surface S3 to a direction intersecting the wall surface S5 located on the righthand side of the wall surface S3 at a 90-degree angle to the wall surface S3 (see a direction of an arrow C in FIG. 11B). Furthermore, assume that a first relative angle is 80° and a second relative angle is 90°.

In this case, when the determining unit 14I has determined that the photographing direction A2 of the photographing unit 12 has turned by the first relative angle (for example, 80°) or more, the resetting unit 14J resets the wall surface S5 located at the second relative angle (for example, 90°) to the wall surface S3, which is the reference plane, as a new reference plane.

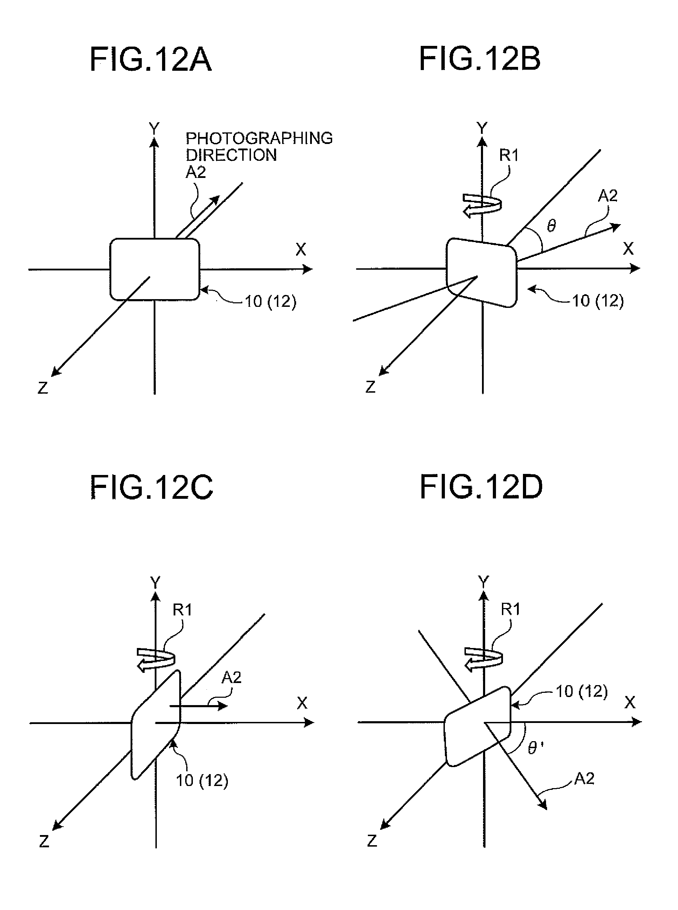

FIGS. 12A to 12D are detailed explanatory diagrams of the resetting of the reference plane.

For example, assume that, as shown in FIG. 12A, the photographing direction A2 of the photographing unit 12 of the image processing apparatus 10 agrees with a -Z-axis direction of the world coordinate system. Then, a plane (a wall surface) intersecting this photographing direction A2 in a real space has been set as a reference plane.

Then, from this state, assume that, as shown in FIG. 12B, the photographing direction A2 of the photographing unit 12 is turned clockwise (in a direction of an arrow R1 in FIG. 12B) by an angle $\theta$ with the Y-axis as the axis of turning. In this case, the position of the reference plane is maintained, so a first relative direction of the reference plane to the photographing direction A2 of the photographing unit 12 is a direction in which the photographing direction A2 is turned counterclockwise (in an opposite direction of the arrow R1 in FIG. 12B) by an angle $-\theta$ with the Y-axis as the axis of turning.

Then, when the turning angle $\theta$ has exceeded a first relative angle (for example, 80°) as shown in FIG. 12C, by the above-described process, a direction in which the reference plane is turned clockwise (in the direction of the arrow R1 in FIG. 12C) by a second relative angle (for example, 90°) with the Y-axis as the axis of turning is reset as a new reference plane. In this case, the first relative direction is a direction in which the photographing direction A2 is turned counterclockwise (in the opposite direction of the arrow R1 in FIG. 12C) by the angle $-\theta$ with the Y-axis as the axis of turning.

Then, assume that, as shown in FIG. 12D, after the new reference plane was reset, the photographing direction A2 of the photographing unit 12 has further turned clockwise (in the direction of the arrow R1 in FIG. 12D) by an angle $\theta'$ with the Y-axis as the axis of turning. Then, when the turning angle $\theta'$ has exceeded the first relative angle (for example, 80°), in the same manner as the above, a direction in which the reference plane is turned clockwise (in the direction of the arrow R1 in FIG. 12D) by the second relative angle (for example, 90°) with the Y-axis as the axis of turning is reset as a new reference plane. Then, the direction of the new reference plane of the photographing direction A2 of the photographing unit 12 becomes a first relative direction. In this case, the first relative direction is a direction in which the photographing direction A2 is turned counterclockwise (in the opposite direction of the arrow R1 in FIG. 12D) by an angle $-\theta'$ with the Y-axis as the axis of turning.

That is, when the first relative angle is 80°, in a state shown in FIG. 12B, a surface parallel to the XY plane in a range of $-80 < \theta < 80$ is set as a reference plane. Furthermore, when the reference plane has been switched as shown in FIG. 12C and a new reference plane has been reset, in a state shown in FIG. 12D, a surface parallel to the YZ plane in a range of -80<θ'<80 is reset as a reference plane.

To return to FIG. 5, the calculating unit 14E calculates second posture information, a first position, a scaling factor, etc. The calculating unit 14E includes a first calculating unit 14K, a second calculating unit 14L, and a third calculating unit 14M.

The first calculating unit 14K calculates second posture information of a reference plane located in a first relative direction derived by the deriving unit 14E. The second posture information is information indicating a posture of a reference plane set to the current photographing direction A2 of the photographing unit 12.

The second posture information is expressed in a turning angle (a roll angle $\alpha$, a pitch angle $\beta$, and a yaw angle $\gamma$) to the photographing direction A2 of the photographing unit 12 just like first posture information.

The first calculating unit 14K calculates second posture information as follows. The first calculating unit 14K calculates second posture information by calculating a turning angle in an opposite direction of a turning angle $(A_t-A_0)$ from the photographing direction A2 of when a reference plane was set to the current photographing direction A2. The second posture information is represented by the following equation (2).

$$(A_t-A_0) = (\alpha_0-\alpha_t, \quad \beta_0-\beta_t, \quad \gamma_0-\gamma_t) \qquad (2)$$

The second calculating unit 14L calculates a first position of a reference plane in a real space. The first position indicates a specific position in a plane (a wall surface) set as a reference plane in a real space. This position is set by a user. Incidentally, the second calculating unit 14L can calculate, as a first position, a position in a reference plane corresponding to a point of intersection with the photographing direction A2 of when the reference plane was set.

Furthermore, the second calculating unit 14L can calculate, as a first position, a position to which the current photographing direction A2 of the photographing unit 12 is turned in a counter-turning direction by the turning angle $(A_t-A_0)$ from the photographing direction A2 of when the reference plane was set to the current photographing direction A2.

The third calculating unit 14M calculates a scaling factor of a second distance with respect to a first distance. The first distance indicates a distance between the photographing unit 12 in a posture identified by first posture information used when a reference plane was set and the reference plane. The second distance indicates a distance between the photographing unit 12 and a temporary plane obtained by turning the reference plane by an angle according to a turning angle of the photographing direction A2 with the photographing unit 12 as the origin.

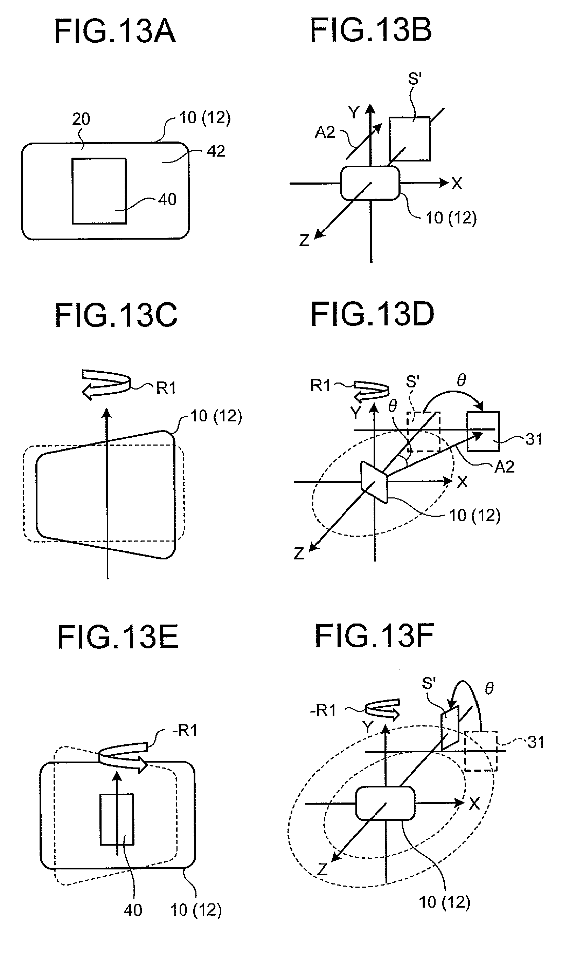

FIGS. 13A to 13F are explanatory diagrams of how to calculate the scaling factor of the second distance with respect to the first distance.

As shown in FIGS. 13A and 13B, when a reference plane (a reference plane S' in FIG. 13B) is set, a wall surface (a plane) intersecting the photographing direction A2 of the photographing unit 12 is set as a reference plane. Therefore, an object image 40 of a drawn virtual object is displayed at an area corresponding to the reference plane in a real-space image 42 on the display unit 20 by a process performed by the display control unit 14G to be described later.

As shown in FIGS. 13C and 13D, the image processing apparatus 10 is turned from the state shown in FIGS. 13A and 13B. That is, the image processing apparatus 10 is turned, thereby the photographing direction A2 of the photographing unit 12 is turned clockwise (in the direction of the arrow R1 in FIGS. 13C and 13D) by an angle θ with the Y-axis as the axis of turning. In this case, the position of the reference plane (see the reference plane S' in FIG. 13D) in a real space is maintained, so a first relative direction of the reference plane to the photographing direction A2 is a direction in which the photographing direction A2 is turned counterclockwise by an angle -θ with the Y-axis as the axis of turning.

Then, the third calculating unit 14M sets a temporary plane 31 that the reference plane S' is turned by an angle according to a turning angle θ of the photographing direction A2 with the photographing unit 12 as the origin.

At this time, a first distance between the photographing unit 12 in a posture identified by first posture information used when the reference plane was set and the reference plane S' is assumed to be "1". Then, a second distance between the photographing unit 12 and the temporary plane 31 is represented by 1/cosθ. The third calculating unit 14M calculates this 1/cosθ as a scaling factor of the second distance with respect to the first distance.

As will be described in detail later, the display control unit 14G arranges the position of a virtual object to be drawn on the reference plane at a distance in a depth direction according to the scaling factor as compared with those of when the reference plane was set. Specifically, when the scaling factor is 1 or more, the virtual object is arranged on the front side in the depth direction (on the side of the position of a viewpoint); on the other hand, when the scaling factor is less than 1, the virtual object is arranged on the back side in the depth direction (on the side away from the position of a viewpoint).

Furthermore, the display control unit 14G draws a virtual object enlarged or reduced according to the scaling factor from the size of when the reference plane was set on an area corresponding to the reference plane (see FIGS. 13E and 13F). Specifically, the display control unit 14G draws a virtual object to be displayed at a size multiplied by cosθ.

To return to FIG. 5, the light-source setting unit 14F sets light source information indicating a light-source effect of a light source. In the present embodiment, the light-source setting unit 14F sets light source information received by the receiving unit 14C.

The display control unit 14G performs control of displaying a superimposed image, in which an object image of a drawn virtual object in a posture of second posture information is superimposed at an area corresponding to a reference plane in a real-space image taken by the photographing unit 12, on the display unit 20. As described above, the display control unit 14G displays the superimposed image by using OpenGL.

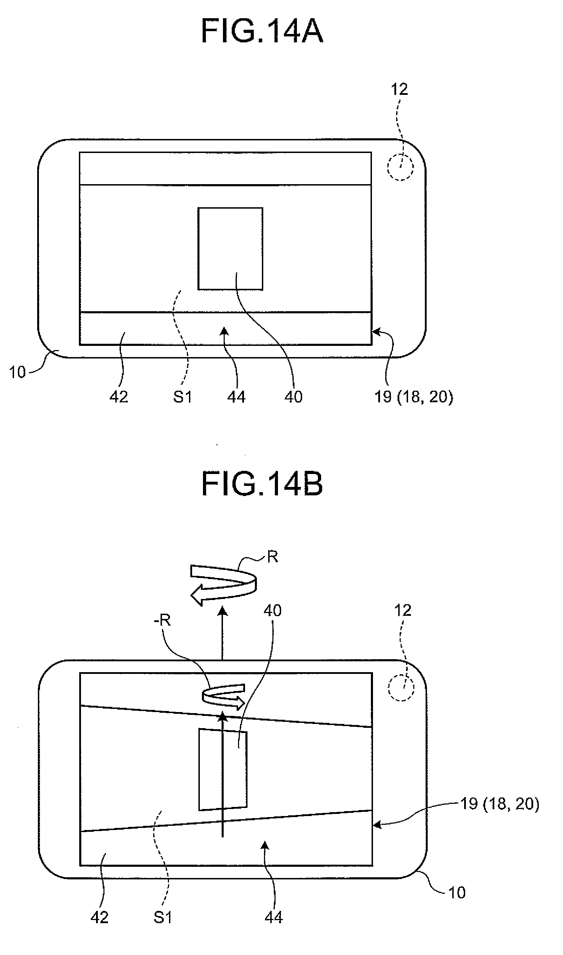

FIGS. 14A and 14B are explanatory diagrams of a display of a superimposed image. As shown in FIG. 14A, a superimposed image 44 is an image that an object image 40 is superimposed on a real-space image 42.

First, the display control unit 14G arranges the real-space image 42 in a virtual three-dimensional space. The display control unit 14G sequentially acquires a sequentially-taken real-space image 42 and arranges the latest (current) real-space image 42 in the virtual three-dimensional space.

Then, the display control unit 14G draws a virtual object in a posture of second posture information in a first relative direction (a relative direction of a reference plane to the photographing direction A2 of the photographing unit 12) with a direction toward the center of the real-space image 42 from the position of a viewpoint in the virtual three-dimensional space as the current photographing direction A2, thereby obtaining the object image 40. By drawing the virtual object in the first relative direction in the virtual three-dimensional space, the virtual object can be drawn on an area of the real-space image 42 corresponding to the reference plane. Incidentally, at this time, it is preferable that the display control unit 14G adds a light-source effect indicated by light source information to the object image 40.

Then, using OpenGL, the display control unit 14G projects this virtual three-dimensional space onto a two-dimensional image viewed from the viewpoint position on the upstream side of the photographing direction A2, thereby generating the superimposed image 44 that the object image 40 is superimposed on the real-space image 42, and displays the generated superimposed image 44 on the display unit 20.

Then, the display control unit 14G repeatedly performs this display process until the display control unit 14G has received a user's instruction to terminate the display process from the receiving unit 14C.

Therefore, when the photographing direction A2 of the photographing unit 12 is turned in accordance with turning of the image processing apparatus 10, the object image 40 is displayed in a posture of second posture information in a first relative direction to the photographing direction A2. Therefore, as shown in FIG. 14B, the object image 40 included in the superimposed image 44 displayed on the display unit 20 turns in an opposite direction (see a direction of an arrow -R in FIG. 14B) of the turning direction of the photographing direction A2 of the photographing unit 12 (see a direction of an arrow R in FIG. 14B).

That is, the superimposed image 44 that seems like as if the object image 40 were attached to the reference plane set by the setting unit 14H is displayed on the display unit 20. Furthermore, while maintaining in a state of being attached to the reference plane, the object image 40 is displayed as if it seems like moving in the opposite direction of the turning direction of the photographing unit 12 on the screen of the display unit 20.

Furthermore, the display control unit 14G performs control of displaying the superimposed image 44, in which the object image 40 of the drawn virtual object in the posture of the second posture information is superimposed at corresponding to the reference plane of the first position in the area of the real-space image 42, on the display unit 20.

Therefore, even when the image processing apparatus 10 is turned, the object image 40 is displayed on the display unit 20 in a state of seeming as if the object image 40 were attached to the reference plane set by the setting unit 14H.

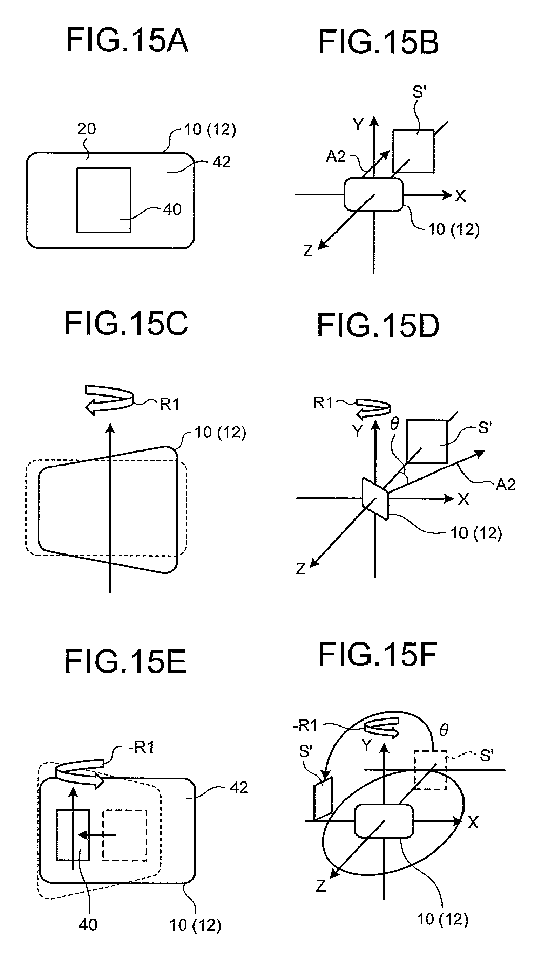

FIGS. 15A to 15F are explanatory diagrams of the display of the object image 40.

As shown in FIGS. 15A and 15B, when a reference plane (a reference plane S' in FIG. 15B) is set, a wall surface (a plane) intersecting the photographing direction A2 of the photographing unit 12 is set as the reference plane S'. Therefore, the object image 40 of the drawn virtual object is displayed at the area corresponding to the reference plane S' in the real-space image 42 by the process performed by the display control unit 14G.

Assume that, as shown in FIGS. 15C and 15D, the image processing apparatus 10 is turned from the state shown in FIGS. 15A and 15B in the direction of the arrow R1. That is, assume that the image processing apparatus 10 is turned, thereby the photographing direction A2 of the photographing unit 12 is turned clockwise (in the direction of the arrow R1 in FIGS. 15C and 15D) by an angle $\theta$ with the Y-axis as the axis of turning. In this case, the position of the reference plane S' in a real space is maintained, so a first relative direction of the reference plane S' is a direction in which the photographing direction A2 is turned counterclockwise by an angle $-\theta$ with the Y-axis as the axis of turning.

As shown in FIGS. 15E and 15F, considering the image processing apparatus 10 as a reference, the virtual object is practically turned by the angle $-\theta$ centering around the image processing apparatus 10.

Then, the display control unit 14G draws the virtual object in the posture of the second posture information on the area of the real-space image of the current real space corresponding to the reference plane of the first position.

As described above, the first position is, for example, a position to which the current photographing direction A2 of the photographing unit 12 is turned in a counter-turning direction by the turning angle $(A_t-A_0)$ from the photographing

direction A2 of when the reference plane was set to the current photographing direction A2. Therefore, as shown in FIGS. 15E and 15F, the display control unit 14G turns the object image 40 so that the object image 40 is arranged in the first position which is the position to which the photographing direction A2 is turned in the opposite direction of the turning direction of the image processing apparatus 10 (the photographing unit 12) by the same turning angle. Then, the display control unit 14G displays the superimposed image on the object image 40.

Therefore, the object image 40 is displayed in a state of being fixed on the set reference plane (such as a wall surface) on the real space.

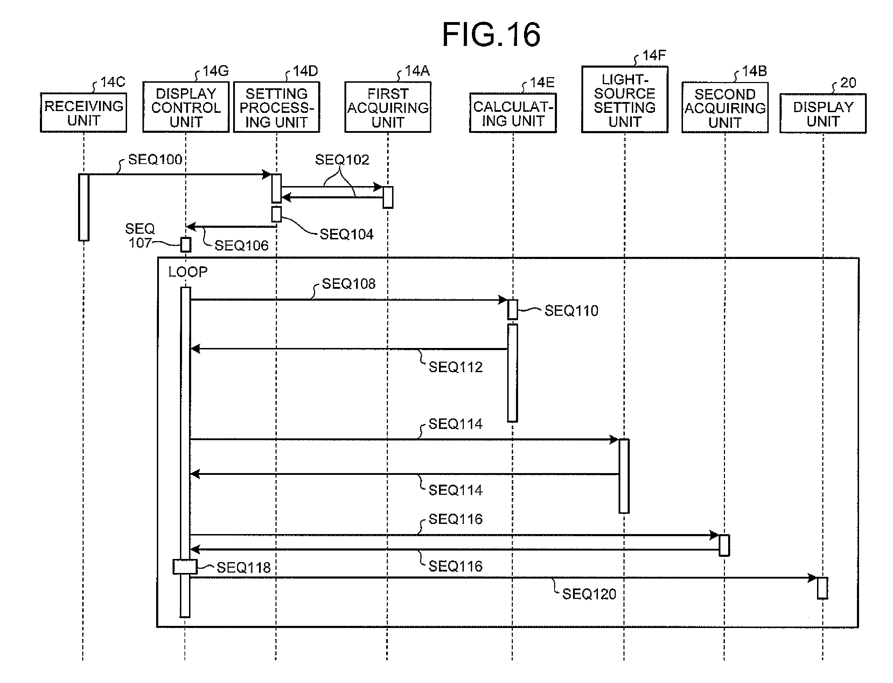

FIG. 16 is a sequence diagram showing a procedure of the display process performed by the image processing apparatus 10.

When the receiving unit 14C has received an instruction to set a reference plane from a user, the receiving unit 14C outputs the instruction to the setting processing unit 14D (SEQ100).

The setting unit 14H of the setting processing unit 14D reads first posture information acquired by the first acquiring unit 14A when the instruction has been received (SEQ102). Then, the setting unit 14H sets a reference plane by using the first posture information read at SEQ102 (SEQ104).

Incidentally, each time new first posture information is detected by the detecting unit 25, the deriving unit 14N derives a first relative direction of the set reference plane to the photographing direction A2 of the photographing unit 12 and outputs the derived first relative direction to the calculating unit 14E and the display control unit 14G. Furthermore, each time a first relative direction is derived, the first calculating unit 14K calculates second posture information and outputs the calculated second posture information to the calculating unit 14E and the display control unit 14G.

Then, the determining unit 14I of the setting processing unit 14D determines whether the photographing direction A2 has turned by a predetermined first relative angle or more since the reference plane was set.

Then, when having determined that the photographing direction A2 has turned by less than the first relative angle, the determining unit 14I notifies the display control unit 14G of the set reference plane (SEQ106). On the other hand, when the determining unit 14I has determined that the photographing direction A2 has turned by the first relative angle or more, the resetting unit 14J resets a reference plane and notifies the display control unit 14G of the reset reference plane (SEQ106).

Through the display process to be described later, the display control unit 14G performs control of displaying the superimposed image 44, in which the object image 40 of the drawn virtual object in the posture of the second posture information is superimposed at the area corresponding to the reference plane in the real-space image 42 taken by the photographing unit 12, on the display unit 20 (SEQ107).

Specifically, the image processing apparatus 10 repeatedly performs the following processes at SEQ108 to SEQ120.

First, the display control unit 14G outputs an instruction to calculate second posture information, a first position, and a relative distance to the calculating unit 14E (SEQ108).

The calculating unit 14E calculates second posture information, a first position, and a relative distance (SEQ110). Then, the calculating unit 14E outputs the calculated second posture information, first position, and relative distance to the display control unit 14G (SEQ112).

The display control unit 14G acquires light source information from the light-source setting unit 14F (SEQ114). Then, the display control unit 14G acquires a real-space image 42 from the second acquiring unit 14B (SEQ116).

Then, the display control unit 14G generates a superimposed image 44 in which an object image 40 of a drawn virtual object in a posture of the second posture information is superimposed at an area of corresponding to a reference plane of the first position in the real-space image 42 (SEQ118), and performs control of displaying the superimposed image 44 on the display unit 20 (SEQ120). Then, the present sequence is terminated.

As explained above, the image processing apparatus 10 according to the present embodiment includes the photographing unit 12, the detecting unit 25, the first acquiring unit 14A, the receiving unit 14C, the setting unit 14H, the deriving unit 14N, the first calculating unit 14K, and the display control unit 14G. The photographing unit 12 photographs a real space. The detecting unit 25 detects first posture information of the photographing unit 12. The first acquiring unit 14A acquires the first posture information from the detecting unit 25. The receiving unit 14C receives a setting instruction from a user. The setting unit 14H sets, when the setting instruction has been received, a reference plane for arranging a virtual object in a real space according to the first posture information. The deriving unit 14N derives a first relative direction of the reference plane to the photographing direction of the photographing unit 12. The first calculating unit 14K calculates second posture information of the reference plane located in the first relative direction. The display control unit 14G performs control of displaying a superimposed image, in which an object image of a drawn virtual object in a posture of the second posture information is superimposed at an area corresponding to the reference plane in a real-space image taken by the photographing unit 12, on the display unit 20.

In this manner, the image processing apparatus 10 according to the present embodiment sets a reference plane in a real space, and draws and displays a virtual object on an area of a real-space image corresponding to the reference plane on the display unit 20. Therefore, the image processing apparatus 10 according to the present embodiment can realize AR technology without having to place an AR marker or the like in a real space.

Consequently, the image processing apparatus 10 according to the present embodiment can easily provide an augmented reality image without depending on an environment of the real space.

Subsequently, a hardware configuration of the image processing apparatus 10 is explained.

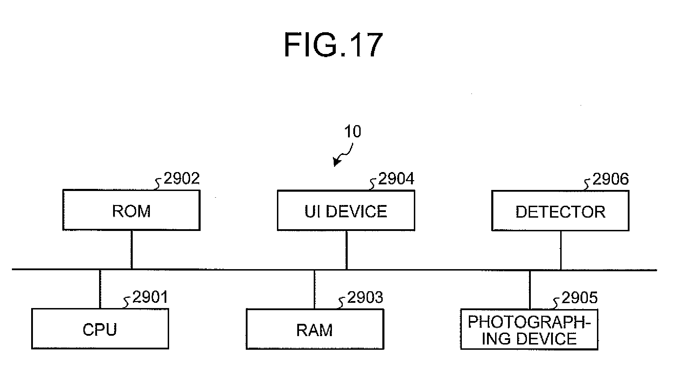

FIG. 17 is a hardware configuration diagram of the image processing apparatus 10. The image processing apparatus 10 mainly includes, as a hardware configuration, a CPU 2901 that controls the entire apparatus, a ROM 2902 that stores therein various data and programs, a RAM 2903 that stores therein various data and programs, a UI device 2904, a photographing device 2905, and a detector 2906, and has a hardware configuration using an ordinary computer. Incidentally, the UI device 2904 corresponds to the UI unit 19 in FIG. 1, the photographing device 2905 corresponds to the photographing unit 12, and the detector 2906 corresponds to the detecting unit 25.

A program executed by the image processing apparatus 10 according to the above-described embodiment is provided as a computer program product in such a manner that the program is recorded on a computer-readable recording medium, such as a CD-ROM, a flexible disk (FD), a CD-R, or a digital versatile disk (DVD), in an installable or executable file format.

Furthermore, the program executed by the image processing apparatus 10 according to the above-described embodiment can be provided in such a manner that the program is stored on a computer connected to a network such as the Internet so that a user can download it via the network. Moreover, the program executed by the image processing apparatus 10 according to the above-described embodiment can be provided or distributed via a network such as the Internet.

Furthermore, the program executed by the image processing apparatus 10 according to the above-described embodiment can be built into a ROM or the like in advance.

The program executed by the image processing apparatus 10 according to the above-described embodiment is composed of modules including the above-described units; a CPU (a processor) as actual hardware reads out the program from the ROM from the recording medium and executes the read program, thereby the above-described units are loaded onto main storage, and the above-described units are generated on the main storage.

According to an embodiment, it is possible to provide an augmented reality image easily.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

**Claims**

1. An image processing apparatus comprising:

    a photographing unit that photographs a real space;
    a detecting unit that detects first posture information of the photographing unit;
    a first acquiring unit that acquires the first posture information from the detecting unit;
    a receiving unit that receives a setting instruction from a user;
    a setting unit that sets, when the setting instruction has been received, a reference plane for arranging a virtual object in the real space, according to the first posture information;
    a deriving unit that derives a first relative direction of the reference plane to a photographing direction of the photographing unit;
    a first calculating unit that calculates second posture information of the reference plane located in the first relative direction; and
    a display control unit that performs control of displaying a superimposed image, in which an object image of a drawn virtual object in a posture of the second posture information is superimposed at an area corresponding to the reference plane in a real-space image taken by the photographing unit, on a display unit.

2. The image processing apparatus according to claim 1, wherein
   the setting unit sets one of multiple wall surfaces composing a room in which the photographing unit is located in the real space as the reference plane, according to the first posture information.

3. The image processing apparatus according to claim 1 or 2, wherein
   the setting unit sets a plane in the real space which intersects the photographing direction as the reference plane.

4. The image processing apparatus according to claim 2 or 3, wherein
   when the photographing direction of the photographing unit and a display direction of the display unit are opposite directions, the setting unit sets, out of multiple wall surfaces composing a room in which the photographing unit is located in the real space, a wall surface which intersects the photographing direction or counter-photographing direction of the photographing unit and forms the smallest angle with a photographing surface perpendicular to the photographing direction, as the reference plane.

**5.** The image processing apparatus according to claim 2 or 3, wherein
when the photographing direction of the photographing unit and a display direction of the display unit are the same direction, the setting unit sets, out of multiple wall surfaces composing a room in which the photographing unit is located in the real space, a wall surface which intersects the photographing direction or counter-photographing direction of the photographing unit and forms the largest angle with a photographing surface perpendicular to the photographing direction, as the reference plane.

**6.** The image processing apparatus according to any one of claims 1 to 5, further comprising a second calculating unit that calculates a first position of the reference plane in the real space, wherein
the display control unit performs control of displaying a superimposed image, in which the object image of the drawn virtual object in the posture of the second posture information is superimposed at an area corresponding to the reference plane in the first position in the real-space image, on the display unit.

**7.** The image processing apparatus according to any one of claims 1 to 6, further comprising:

a determining unit that determines whether the photographing direction has turned by a predetermined first relative angle or more since the reference plane was set on the basis of a result of a comparison between the first posture information used in the setting of the reference plane and currently-acquired first posture information; and
a resetting unit that resets, when it has been determined that the photographing direction has turned by the first relative angle or more, a plane obtained by turning the reference plane by a second relative angle larger than the first relative angle, as a new reference plane.

**8.** The image processing apparatus according to any one of claims 1 to 7, further comprising a third calculating unit that calculates a scaling factor of a second distance between the photographing unit and a temporary plane obtained by turning the reference plane by an angle according to a turning angle of the photographing direction with the photographing unit as the origin, with respect to a first distance between the photographing unit in a posture identified by the first posture information used to set the reference plane and the reference plane, wherein
the display control unit performs control of displaying a superimposed image, in which an object image of the drawn virtual object that is in the posture of the second posture information and is enlarged or reduced according to the scaling factor with respect to when the reference plane was set is superimposed at the area corresponding to the reference plane in the real-space image taken by the photographing unit, on the display unit.

**9.** The image processing apparatus according to any one of claims 1 to 8, further comprising a light-source setting unit that sets light source information indicating a light-source effect of a light source, wherein
the display control unit performs control of displaying a superimposed image, in which an object image with the light-source effect indicated by the light source information added is superimposed at the area corresponding to the reference plane in the real-space image taken by the photographing unit, on the display unit.

**10.** An image processing method implemented by an image processing apparatus including a photographing unit that photographs a real space and a detecting unit that detects first posture information of the photographing unit, the image processing method comprising:

acquiring the first posture information from the detecting unit;
receiving a setting instruction from a user;
setting, when the setting instruction has been received, a reference plane for arranging a virtual object in the real space, according to the first posture information;
deriving a first relative direction of the reference plane to a photographing direction of the photographing unit;
calculating second posture information of the reference plane located in the first relative direction; and
performing control of displaying a superimposed image, in which an object image of a drawn virtual object in a posture of the second posture information is superimposed at an area corresponding to the reference plane in the real-space image taken by the photographing unit, on a display unit.

**11.** A computer program product comprising a non-transitory computer-readable medium containing an information processing program, the program causing a computer including a photographing unit that photographs a real space and a detecting unit that detects first posture information of the photographing unit to execute:

acquiring the first posture information from the detecting unit;

receiving a setting instruction from a user;

setting, when the setting instruction has been received, a reference plane for arranging a virtual object in the real space, according to the first posture information;

deriving a first relative direction of the reference plane to a photographing direction of the photographing unit;

calculating second posture information of the reference plane located in the first relative direction; and

performing control of displaying a superimposed image, in which an object image of a drawn virtual object in a posture of the second posture information is superimposed at an area corresponding to the reference plane in the real-space image taken by the photographing unit, on a display unit.

# FIG.1

<u>10</u>

```
┌─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ┐
```

                              ⌇14                                    ⌇16
         ⌇12              ┌───────────────┐                    ┌───────────────┐
    ┌───────────────┐     │    DISPLAY    │                    │    STORAGE    │
    │  PHOTOGRAPH-  │     │  PROCESSING   │                    │     UNIT      │
    │   ING UNIT    │     │     UNIT      │                    └───────────────┘
    └───────────────┘     └───────────────┘

                                                                              ⌇22

```
      ┌─ ─ ─ ─ ─ ─ ─ ─ ─ ─ ─ ─ ─ ─ ─ ─ ─ ─ ─ ─ ─ ┐
```
              ⌇18                    ⌇20                            ⌇25
      ┌───────────────┐      ┌───────────────┐            ┌───────────────┐
      │  INPUT UNIT   │      │  DISPLAY UNIT │            │   DETECTING   │
      └───────────────┘      └───────────────┘            │     UNIT      │
```
      └─ ─ ─ ─ ─ ─ ─ ─ ─ ─ ─ ─ ─ ─ ─ ─ ─ ─ ─ ─ ─ ┘
```

                              19

# FIG.2A

# FIG.2B

# FIG.3A

# FIG.3B

# FIG.4

# FIG.5

# FIG.6

| LIGHT SOURCE ID | LIGHT SOURCE NAME | LIGHT SOURCE INFORMATION | | |
|---|---|---|---|---|
| | | SPECULAR LIGHT | DIFFUSED LIGHT | AMBIENT LIGHT |
| 1 | SPOTLIGHT | (1.00, 0.95, 0.95) | (1.00, 0.95, 0.95) | (1.00, 0.95, 0.95) |
| 2 | FLUORESCENT LIGHT NATURAL WHITE COLOR | (1.00, 1.00, 1.00) | (1.00, 1.00, 1.00) | (1.00, 1.00, 1.00) |
| ⋮ | ⋮ | ⋮ | ⋮ | ⋮ |

FIG.7A

LANDSCAPE

PITCH ANGLE
=DIRECTION SETTING

A2 (A1)

10 (12, 20)

ROLL
ANGLE=
$\pi/2$

YAW
ANGLE=0

A1 (A2)

FIG.7B

FACE-UP

YAW ANGLE
=DIRECTION SETTING

PITCH ANGLE=0

A1

10 (12, 20)

ROLL
ANGLE=0

A2

FIG.7C

FACE-DOWN

A2

10 (12, 20)

ROLL
ANGLE=$\pi$

A1

PITCH ANGLE=0

YAW ANGLE
=DIRECTION SETTING

# FIG.8A

# FIG.8B

# FIG.9

φ1 < φ2

# FIG.10

φ1 < φ2

# FIG.11A

S6

S

S5

12   10

S3

19 (18, 20)

A2   A1

S2

S1

# FIG.11B

S6

S

S5

S3

C   A2   12

10

S2

19 (18, 20)

S1

# FIG.12A

PHOTOGRAPHING
DIRECTION
A2

Y

X

10 (12)

Z

# FIG.12B

Y

R1

A2

θ

X

10 (12)

Z

# FIG.12C

Y

R1

A2

X

10 (12)

Z

# FIG.12D

Y

R1

10 (12)

X

θ'

A2

Z

# FIG.13A

# FIG.13B

# FIG.13C

# FIG.13D

# FIG.13E

# FIG.13F

# FIG.14A

10

42    S1    44    40    19 (18, 20)

12

# FIG.14B

R

-R    40    12

42    S1    44    19 (18, 20)    10

# FIG.15A

20    10 (12)
42
40

# FIG.15B

S'
Y
A2
X
Z
10 (12)

# FIG.15C

R1
10 (12)

# FIG.15D

R1
Y    θ
S'
A2
X
Z
10 (12)

# FIG.15E

-R1
42
40    10 (12)

# FIG.15F

-R1    θ
S'
Y
S'
X
Z
10 (12)

# FIG.16

EP 2 991 039 A1

# FIG.17

Europäisches
Patentamt
European
Patent Office
Office européen
des brevets

## EUROPEAN SEARCH REPORT

Application Number

EP 15 17 9914

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WONWOO LEE ET AL: "Video-Based In Situ Tagging on Mobile Phones", IEEE TRANSACTIONS ON CIRCUITS AND SYSTEMS FOR VIDEO TECHNOLOGY, IEEE SERVICE CENTER, PISCATAWAY, NJ, US, vol. 21, no. 10, 1 October 2011 (2011-10-01), pages 1487-1496, XP011361161, ISSN: 1051-8215, DOI: 10.1109/TCSVT.2011.2162767 * abstract * * Section III * * Section V * * figures 1,8,14 * | 1-6,8-11 | INV. G06T19/00 |
| X | WO 2013/118458 A1 (SONY CORP [JP]) 15 August 2013 (2013-08-15) * abstract * * paragraph [0013] - paragraph [0029] * * paragraph [0033] - paragraph [0036] * * paragraph [0049] - paragraph [0050] * * paragraph [0059] - paragraph [0081] * * paragraph [0100] - paragraph [0102] * * figures 1,2,3,6A,6B,9,10,11,13,17 * | 1-3,6-11 | |
| A | Fine Art America: "Pixels.com iPad App With Augmented Reality "View on Wall" Interface", , 21 July 2014 (2014-07-21), XP054976310, Retrieved from the Internet: URL:https://www.youtube.com/watch?v=nc1tOnPXoqo [retrieved on 2016-01-19] * 0:15-0:43 * | 1-11 | |

TECHNICAL FIELDS
SEARCHED (IPC)

G06T

The present search report has been drawn up for all claims

| Place of search | Date of completion of the search | Examiner |
|---|---|---|
| Munich | 20 January 2016 | Salvador, Elena |

EPO FORM 1503 03.82 (P04C01)

## ANNEX TO THE EUROPEAN SEARCH REPORT
## ON EUROPEAN PATENT APPLICATION NO.

EP 15 17 9914

This annex lists the patent family members relating to the patent documents cited in the above-mentioned European search report.
The members are as contained in the European Patent Office EDP file on
The European Patent Office is in no way liable for these particulars which are merely given for the purpose of information.

20-01-2016

| Patent document cited in search report | | Publication date | Patent family member(s) | | | Publication date |
|---|---|---|---|---|---|---|
| WO 2013118458 | A1 | 15-08-2013 | AU | 2013219082 | A1 | 03-07-2014 |
| | | | CN | 104081317 | A | 01-10-2014 |
| | | | EP | 2812770 | A1 | 17-12-2014 |
| | | | JP | 2013164696 | A | 22-08-2013 |
| | | | KR | 20140130675 | A | 11-11-2014 |
| | | | TW | 201346640 | A | 16-11-2013 |
| | | | US | 2014313228 | A1 | 23-10-2014 |
| | | | WO | 2013118458 | A1 | 15-08-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014173041 A

- JP 2013186691 A